# EUROPEAN PATENT APPLICATION

(11) **EP 4 400 976 A2**
(43) Date of publication of application: **17.07.2024**
(21) Application number: 24151390.2
(22) Date of filing: 11.01.2024
(51) Int. Cl.: G06F 11/36

(54) **SECOND PARTY SOFTWARE COMPONENTS DISCOVERY**

(30) Priority: 12.01.2023 US 202318153530
(71) Applicant: Veracode, Inc., Burlington, MA 01803 (US)
(72) Inventor: Trotter, William Alger, Burlington, 01803 (US); Fielding, Anthony Christopher, Burlington, 01803 (US)
(74) Representative: Prinz & Partner mbB

(57) **Abstract**

Identifying a second party reusable software component involves analyzing source code of applications to identify an external dependency that does not refer to third party software components and occurs in multiple applications. After identifying second party software components, the occurrence of the external dependencies corresponding to second party software components can be reported and can facilitate triage of flaws found for the second party software components, as well as other component management actions (e.g., increasing collaboration and communication among teams using and creating reusable software components, version awareness, flaw surface awareness, etc.).

## Description

### BACKGROUND

The disclosure generally relates to electrical digital data processing (e.g., CPC Subclass G06F) and software design (e.g., subclass G06F 8/20).

Software composition analysis (SCA) refers to analysis of an application to determine open source software (OSS) components used in the application. An SCA tool scans the source code of an application to identify dependencies or imports of OSS components. Some SCA tools will also analyze the scan results to provide information relating to vulnerabilities and license compliance.

### BRIEF DESCRIPTION OF THE DRAWINGS

Embodiments of the disclosure may be better understood by referencing the accompanying drawings.
Figure 1 depicts a tool that analyzes application scan results to identify and report on second party software components.
Figure 2 is a flowchart of example operations for discovering 2^{nd} party software components with flaws in applications of an organization.
Figure 3 is an example diagram of a 2^{nd} party software component identifier analyzing source code of applications to identify 2^{nd} party external dependencies and report occurrence of those 2^{nd} party external dependencies.
Figure 4 is a flowchart of example operations for discovering 2^{nd} party software components in applications.
Figure 5 is a flowchart of example operations for determining occurrence of reusable software components across applications of an organization.
Figure 6 depicts an example computer system with a 2^{nd} party software component identifier.

### DESCRIPTION

The description that follows includes example systems, methods, techniques, and program flows to aid in understanding the disclosure and not to limit claim scope. Well-known instruction instances, protocols, structures, and techniques have not been shown in detail for conciseness. Generally, the method described relates to a computerimplemented method. The respective aspects mentioned hereinafter and/or claimed in connection with methods, non-transitory, machine-readable mediums and apparatuses can be exchanged among each other. Accordingly, the apparatus claimed can be generally configured to perform the method claimed and/or can comprise the non-transitory, machine-readable medium claimed. Moreover, the non-transitory, machine-readable medium may generally have program code stored thereon, the program code comprising instructions which, when executed by a processor, cause the processor to perform the steps of the method claimed.

### Overview

While scanning tools identify use of 3^{rd} party software components in an application and flaws in an application, occurrence of "2^{nd} party software components" in applications of an organization remains a blind spot. The term "2^{nd} party software component" refers to a reusable software component that is neither first party nor third party relative to an application. The reusable software component is 2^{nd} party because it was developed by a developer entity (e.g., developer(s)/development team) having a direct relationship with the development entity of an application (i.e., being within a same organization) but the development entities are not the same. The reusable software components that fall within this gap between first party and third party are often not scrutinized for vulnerabilities and use across applications is not tracked. Identifying a second party reusable software component involves analyzing source code of applications to identify an external dependency that does not refer to third party software components and occurs in multiple applications. After identifying second party software components, the occurrence of the external dependencies corresponding to second party software components can be reported and can facilitate triage of flaws found for the second party software components.

### Example Illustrations

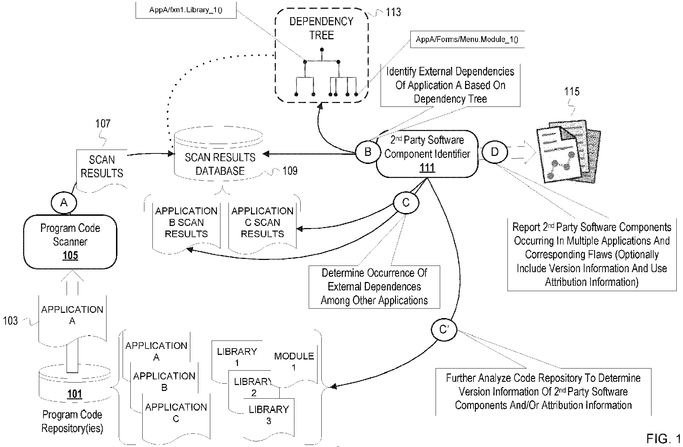

Figure 1 depicts a tool that analyzes application scan results to identify and report on second party software components. Figure 1 depicts a program code scanner 105, a scan results database 109, and a 2^{nd} party software component identifier 111. The program code scanner 105 can scan according to one or a combination of application testing (e.g., quality assurance testing, static application security testing (SAST), dynamic application security testing (DAST), and penetration testing). In this illustration, program code of an application in a program code repository(ies) 101 is submitted to the program code scanner 105 for scanning. The program code scanner 105 (hereinafter scanner) stores results in the scan results database 109. The 2^{nd} party software component identifier 111 analyzes scan results and source code in the program code repository 101 (hereinafter code repository) to identify 2^{nd} party software components. The code repository 101 is depicted as including program code of APPLICATION A, APPLICATION B, APPLICATION C, LIBRARY 1, LIBRARY 2, LIBRARY 3, and MODULE 1. Figure 1 depicts a MODULE 1 and a LIBRARY *N* simply to illustrate examples of a few different granularities of reusable software components. A program code repository can be a binary code repository, a source code repository, and/or software container or virtual machine image repository.

Figure 1 is annotated with a series of letters A-D and C'. Each stage represents one or more operations. Although these stages are ordered for this example, the stages illustrate one example to aid in understanding this disclosure and should not be used to limit the claims. Subject matter falling within the scope of the claims can vary from what is illustrated.

At stage A, the scanner 105 stores scan results 107 generated from scanning program code 103 of APPLICATION A into the scan results database 109. The program code 103 has been submitted to the scanner 105 according to a scanner deployment used by an organization. The organization may upload the code via an online portal which provides the scanning functionality of the scanner 105 as a service and returns the scan results 107 for storing into the organization's scan results database 109. Alternative examples include the scanner 105 being a locally deployed tool or hosted on a private cloud or network of the organization. While information and format of scanning results can vary, basic information from scanning includes an identifier of the application, detected flaws, and software component identifiers in association with the corresponding detected flaws.

At stage B, the 2^{nd} party software component identifier 111 identifies external dependencies in the scan results of APPLICATION A based on a dependency tree 113 of APPLICATION A. If the scan results 107 do not include information for the dependency tree 113, the 2^{nd} party software component identifier 111 can invoke functionality of another tool to generate the dependency tree 113 or build its own dependency tree or graph. The 2^{nd} party software component identifier 111 analyzes the scan results 107 and the dependency tree 113 to identify external dependencies indicated in the scan results 107. In this illustration, the scan results 107 at least indicate Library_1 and Module_1 as having flaws which the 2^{nd} party software component identifier 111 determines as being external dependencies based on location within the dependency tree 113. In the example of Figure 1, the 2^{nd} party software component identifier 111 identifies Library1 as a reusable software component that is not first party based on it being indicated in the path AppA/fnx1.Library_1. The 2^{nd} party software component identifier 111 identifies Module1 as a reusable software component that is not first party based on the hierarchical path AppA/Forms/Module_1. The 2^{nd} party software component identifier 111 determines these external dependencies as referring to 2^{nd} party software components because the scan results 107 do not include external dependencies that refer to 3^{rd} party software components. If scan results include references to 3^{rd} party software components, the 2^{nd} party software component identifier 111 will initially filter out these external dependencies from consideration. For instance, the 2^{nd} party software component identifier 111 can filter out external dependencies referring to 3^{rd} party software components using a library of known 3^{rd} party software components.

At stage C, the 2^{nd} party software component identifier 111 analyzes scan results of other applications in the scan results database 109 to determine occurrence of identified external dependencies among other applications. The 2^{nd} party software component identifier 111 iteratively searches the scan results of other applications in the scan results database 109 for occurrence of the external dependencies identified in the APPLICATION A scan results 107 as referring to 2^{nd} party software components ("2^{nd} party external dependencies"). For example, the 2^{nd} party software component identifier 111 searches scan results for strings matching the 2^{nd} party external dependencies. The 2^{nd} party software component identifier 111 tracks matches with indications of the 2^{nd} party matching an external dependency and an application identifier. The 2^{nd} party software component identifier 111 can also maintain a count of application occurrence (i.e., number of applications in which the 2^{nd} party external dependency occurs).

At stage D, the 2^{nd} party software component identifier 111 reports the 2^{nd} party software components occurring in multiple applications and the corresponding flaws. The 2^{nd} party software component identifier 111 creates a report 115 (e.g., a file or document) that indicates each of the 2^{nd} party software components referred to by the external dependencies found to occur in APPLICATION A code as well as code of at least one other application. An organization can use the reported information to determine a plan of action based on spread of 2^{nd} party software components across the application catalog of the organization. For example, the organization can choose to expend resources to addressing the flaws of 2^{nd} party software components occurring in more than 20% of its applications. Indication of the flaw at least identifies the flaw, but can also indicate additional information, such as severity rating or category information.

In addition to the above, an organization can gather more information to inform its decision on how to address occurrence of 2^{nd} party software components with flaws across the organization's applications. At stage C', the 2^{nd} party software component identifier 111 analyzes program code in the organization's code repository 101 to determine additional information about the identified 2^{nd} party software components. Examples of additional information include version information and attribution information (e.g., software component owner(s)). When reporting the 2^{nd} party software component occurrence, the 2^{nd} party software component identifier 111 can include current version and version used in each application along with contact information for the owner of the 2^{nd} party software component.

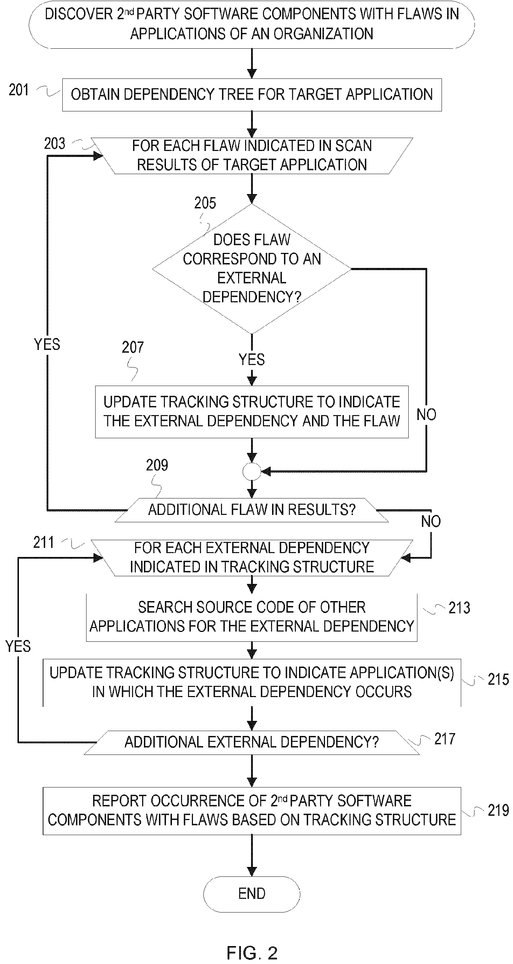

Figure 2 is a flowchart of example operations for discovering 2^{nd} party software components with flaws in applications of an organization. For consistency with Figure 1, description of the example operations will refer to 2^{nd} party software component identifier as performing the operations. These operations also assume that the scan results of an application do not include external dependencies referring to 3^{rd} party software components (e.g., open source software components). These are either not included in the scan results by the scanner or are filtered out.

At block 201, the 2^{nd} party software component identifier obtains a dependency tree for a target application. "Target application" refers to the application for which scan results have been detected or retrieved. As previously stated, a dependency tree or information for a dependency tree may or may not be included in scan results. If not, another program code analysis tool can be used to create dependency tree information. Embodiments do not necessarily use a dependency tree. Embodiments can instead parse files (e.g., build files, dependency files, package files) to find a token, keyword, or directive that indicates an external dependency (e.g., import, include, using).

At block 203, the 2^{nd} party software component identifier begins iterating over the flaws indicated in the scan results of the target application to identify 2^{nd} party external dependencies. Scan results can delineate flaws by line, tag, individual object, etc., depending upon implementation of the scan results. Each iteration includes the example operations of blocks 203, 205, 207, and 209.

At block 205, the 2^{nd} party software component identifier determines whether the flaw corresponds to an external dependency. With a dependency tree, the 2^{nd} party software component identifier locates the external dependency and determines that the external dependency is a 2^{nd} party external dependency if it occurs in the dependency tree at a hierarchy level greater than 1 or root, assuming root node in a dependency tree of an application is level 1. With this assumption, all components indicated deeper than root are considered external dependencies. If the 2^{nd} party software component identifier determines that the flaw corresponds to an external dependency then operational flow proceeds to block 207. Otherwise, operational flow proceeds to block 209.

At block 207, the 2^{nd} party software component identifier updates a tracking structure to indicate the external dependency and the flaw. Indicating the external dependency may be writing a string that identifies the 2^{nd} party software component or the external dependency itself into the tracking structure. In some cases, an external dependency refers to or indicates a 2^{nd} party software component with a value, such as an encoded filename. Identification of a component as a 2^{nd} party software component may involve additional analysis even when the dependency tree does not include known 3^{rd} party software components if unknown 3^{rd} party software components are possible. To filter out unknown 3^{rd} party software components from being identified as 2^{nd} party software components, the tracking structure can be processed to determine whether identified components include a component that does not fall within a namespace of the organization or does not exist in a code repository of the organization.

At block 209, the 2^{nd} party software component identifier determines whether there is another flaw in scan results to evaluate. If there is another flaw, then operational flow returns to block 203. If there is not another flaw, then operational flow proceeds to block 211.

At block 211, the 2^{nd} party software component identifier begins iterating over the 2^{nd} party external dependencies discovered in the scan results. This can be a traversal of the data structure used to track the 2^{nd} party external dependencies discovered in the scan results. Each iteration includes the example operations of blocks 211, 213, 215, and 217.

At block 213, the 2^{nd} party software component identifier searches source code of other applications for the external dependencies. If not already a string, the 2^{nd} party software component identifier converts the indication of the external dependency in the tracking structure into a string. The 2^{nd} party software component identifier does not necessarily search all files of an application. The 2^{nd} party software component identifier can limit searching to those files that declare imports or have similar statements to include external dependencies.

At block 215, the 2^{nd} party software component identifier updates the tracking structure to indicate the application(s) in which the external dependency occurs. As the 2^{nd} party software component identifier encounters an occurrence of the external dependency, the 2^{nd} party software component identifier records an identifier of the application. The 2^{nd} party software component identifier can also track number of occurrences of an external dependency within an application.

At block 217, the 2^{nd} party software component identifier determines whether there is another external dependency to search for. If there is another external dependency to search for in the tracking structure, then operational flow returns to block 211. If not, then operational flow proceeds to block 219.

At block 219, the 2^{nd} party software component identifier reports occurrence of 2^{nd} party software components with flaws based on the tracking structure. The 2^{nd} party software component identifier generates a document, generates a file, updates a visualization (e.g., browser-based dashboard), etc. that indicates the 2^{nd} party software components with flaws detected in the scan results of the target application and occurrence of those 2^{nd} party software components across other applications. An example report indicates each 2^{nd} party software component name, version number or name of the 2^{nd} party software component if derivable, number of applications in which the corresponding external dependency occurs, and flaw occurrence quantity within each application. The target application and the other applications have been developed by a same entity (e.g., company, online community, etc.).

While Figures 1 and 2 depict identification of 2^{nd} party software components based on scan results, embodiments are not so limited. Embodiments can analyze source code of applications to find commonly occurring external dependencies that are not 3^{rd} party external dependencies. Embodiments can also search for 2^{nd} party external dependencies across applications after building an inventory of reusable software components within an organization, such as source code and build/artifact repositories.

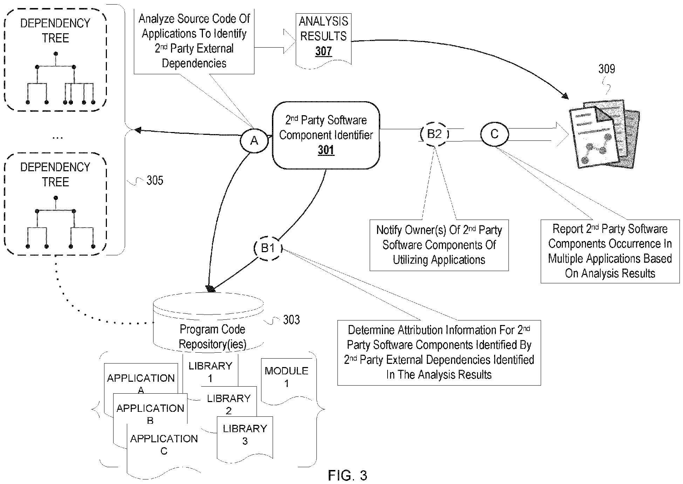

Figure 3 is an example diagram of a 2^{nd} party software component identifier analyzing source code of applications to identify 2^{nd} party external dependencies and report occurrence of those 2^{nd} party external dependencies. Instead of beginning with scan results of an application, a 2^{nd} party software component identifier 301 analyzes source code of applications to identify commonly occurring external dependencies as 2^{nd} party external dependencies. Figure 3 depicts a program code repository(ies) 303 hosting source code of APPLICATION A, APPLICATION B, and APPLICATION C. The program code repository 303 also hosts source code of LIBRARY 1, LIBRARY 2, LIBRARY 3, and MODULE 1. Similar to Figure 1, Figure 3 is annotated with letters A and C each representing stages of one or more operations. Instead of a stage B, Figure 3 includes optional stages B1 and B2 depicted in dashed lines.

At stage A, the 2^{nd} party software component identifier 301 analyzes source code of applications to identify external dependencies. This analysis involves obtaining or creating dependency tree information 305 for the applications and identifying calls or invocations that reside beyond a first hierarchical level or root. The analysis also involves filtering out 3^{rd} party external dependencies. The 2^{nd} party software component identifier 301 references a directory or database of 3^{rd} party software components used by the organization corresponding to the program code repository 303 to identify 3^{rd} party external dependencies and eliminate them from consideration. The 2^{nd} party software component identifier 301 further determines which of the remaining external dependencies occur in source code of multiple applications. The 2^{nd} party software component identifier 301 eliminates from considerations those of the external dependencies that occur in a single application. The remaining external dependencies are identified or considered as 2^{nd} party external dependencies based on a programmed inference that filtering out 3^{rd} party external dependencies and single application occurring external dependencies yields 2^{nd} party external dependencies. The 2^{nd} party software component identifier 301 generates analysis results 307 that list the identified 2^{nd} party external dependencies and corresponding applications in which each external dependency occurs. Additional information in the results 307 can include statistical information (e.g., frequency of occurrence within each application) and version information (e.g., version indicated in each application).

At stage B1, the 2^{nd} party software component identifier 301 determines attribution information for the 2^{nd} party software components identified by the 2^{nd} party external dependencies. The attribution information includes contact information of the owner(s) of a 2^{nd} party software component identified by a 2^{nd} party external dependency. This may be a group or individual within an organization responsible for maintaining the software component.

At stage B2, the 2^{nd} party software component identifier 301 notifies owners of the 2^{nd} party software components of the utilizing applications. The 2^{nd} party software component identifier 301 can group software components by owner and then communicate to the owner (e.g., via e-mail) the applications that utilize the software components maintained by the group. This can facilitate further communication between development teams related to maintenance and improvement of reusable software components. In addition, the 2^{nd} party software component identifier 301 can notify the development entity that owns a utilizing application of a recommended version of the component to use if not currently being used.

At stage C, the 2^{nd} party software component identifier 301 reports 2^{nd} party software component occurrence in the multiple applications based on the analysis results. The 2^{nd} party software component identifier 301 generates a report 309 listing the 2^{nd} party software components used by multiple applications and listing out the applications that use each component. The 2^{nd} party software component identifier 301 can include attribution information. In addition, the report can indicate a current version of each software component and the version used in each application, if ascertainable from the source code. Furthermore, the 2^{nd} party software component identifier 301 can also create the report 309 to indicate frequency of occurrence of each 2^{nd} party software component across applications. This can inform an organization of how widespread each software component is used through the organization.

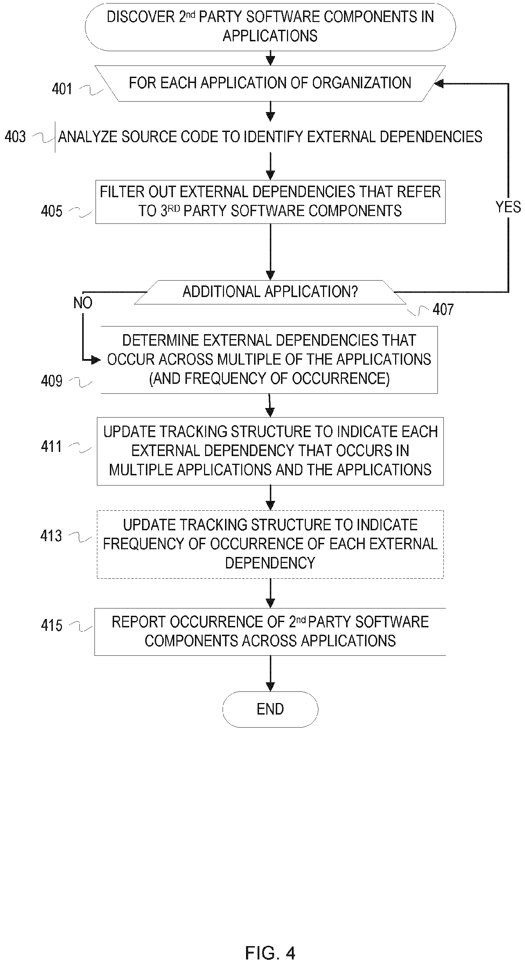

Figure 4 is a flowchart of example operations for discovering 2^{nd} party software components in applications. The flowchart of Figure 4 analyzes source code of applications to identify 2^{nd} party software components, similar to the illustration in Figure 3. However, the operations in Figure 4 do not rely on dependency trees.

At block 401, a 2^{nd} party software component identifier begins iteratively analyzing source code of applications of an organization. The 2^{nd} party software component identifier iterates over application source code in a specified program code repository. Multiple program code repositories can be specified for accessing by the 2^{nd} party software component identifier. Implementations can decompose the task differently (e.g., spawning a thread for each application to analyze source code of multiple applications in parallel).

At block 403, the 2^{nd} party software component identifier analyzes source code of an application to identify external dependencies. While a dependency tree can be used as previously mentioned, embodiments can select files or directories of an application known to indicate external dependencies (e.g., build files, pom files, build directories, package files, NUSpec files, etc.) or search for keywords/statements found in declaration sections that indicate files to link or import. If a dependency tree is not already available (e.g., from scan results), then a hierarchy of dependencies is recorded based on analyzing program code. Depending on platform and/or programming language, the analysis can vary. For instance, analyzing to identify external dependencies can involve parsing files that delineate software components to be loaded or imported to identify external dependencies. Analyzing to identify external dependencies can also or instead involve examining application structure or application paths hierarchy indicated in a code repository(ies) that indicate dependencies.

At block 405, the 2^{nd} party software component identifier filters out external dependencies that refer to 3^{rd} party software components. The 2^{nd} party software component identifier can compare the identified external dependencies against a listing (e.g., database) of 3^{rd} party software components. The listing can be local and/or remote. The 2^{nd} party software component identifier can select specified 3^{rd} party code repositories and/or compare the identified external dependencies against a listing of 3^{rd} party software components approved for use by applications of the organization. Furthermore, namespaces can be leveraged to identify external dependencies as referring to 3^{rd} party software components or likely being 2^{nd} party software components. This can depend upon naming conventions and specifications of the organization, technology platform, and/or programming language. In some cases, an external dependency may refer to a 3^{rd} party software component not identified in a public listing. Analysis of a program code repository can eliminate these "unknown" 3^{rd} party software components as 2^{nd} party software components. This can be based on comparison of namespaces (e.g., the naming of the software component does not conform to the organizations naming convention or confirmed namespaces of the organization).

At block 407, the 2^{nd} party software component identifier determines whether there is an additional application source code to process. If there is another application source code to process, then operational flow returns to block 401. If not, then operational flow proceeds to block 409.

At block 409, the 2^{nd} party software component identifier determines which of the remaining external dependencies occur across multiple of the applications. This determination varies depending upon implementation. If the remaining external dependencies are recorded in a database with each entry also indicating the external dependency, then queries can be submitted to determine which external dependencies occur across multiple applications and which applications. If an implementation uses a data structure (e.g., hash table), the data structure can have an entry for each remaining external dependency which references a list or array of applications in which the external dependency occurs. In addition to recording identifiers of the applications in which external dependencies occur, the 2^{nd} party software component identifier can determine frequency of occurrence. Frequency of occurrence can be global (e.g., occurrence count across all applications for each external dependency) or at application granularity (e.g., invocation/call count within each application across the various functions/methods of a reusable software component).

At block 411, the 2^{nd} party software component identifier updates a tracking structure to indicate each external dependency that occurs across multiple applications. For instance, the 2^{nd} party software component identifier can update the data structure used to record external dependencies yielded from the source code analysis (403) and occurrence analysis (409) to remove each external dependency occurring in a single application.

At block 413, the 2^{nd} party software component identifier updates the tracking structure to indicate frequency of occurrence of each external dependency. Block 413 is depicted in a dashed line to indicate the represented operation(s) as optional. As mentioned before, the occurrence statistic can include a global occurrence frequency and/or a per application occurrence frequency.

At block 415, the 2^{nd} party software component identifier reports occurrence of 2^{nd} party software components across applications. The 2^{nd} party software component identifier can generate the report based on the tracking structure. Alternatively, the 2^{nd} party software component identifier can indicate that a database or data set with the information about 2^{nd} party external dependencies has been completed. The database or dataset can be queried to extract desired information via an interface. Additional information about the applications can be added to the database or dataset to allow for richer queries and results. For instance, a user may submit a query for any 2^{nd} party software component that occurs in applications published within a specified relative time period (e.g., within the last year) and having a global occurrence frequency greater than 20%.

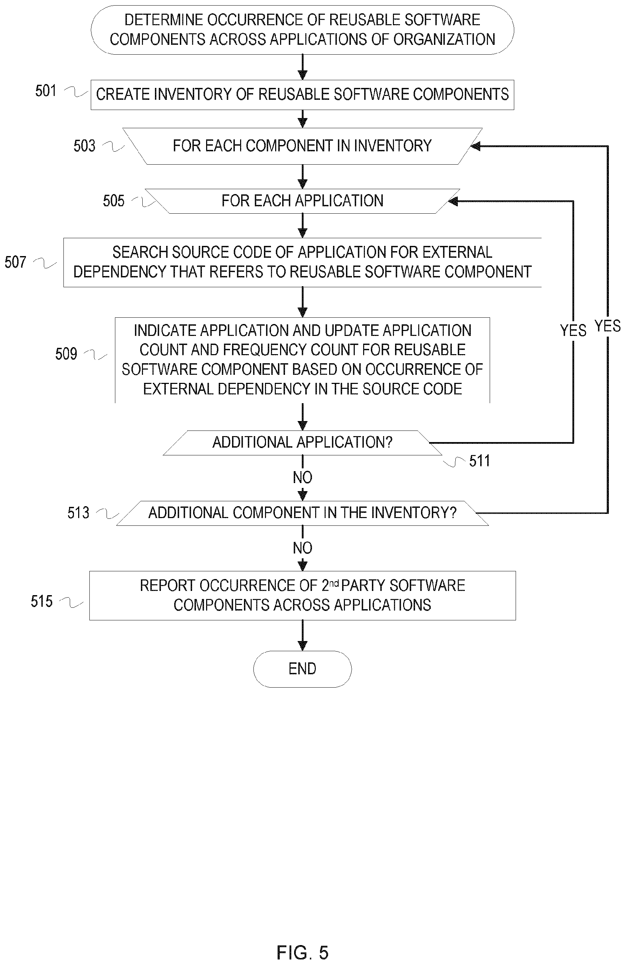

Figure 5 is a flowchart of example operations for determining occurrence of reusable software components across applications of an organization. The operations of Figure 5 are similar to those of Figure 4. However, the approach of Figure 5 presumes that reusable software components within an organization (i.e., 2^{nd} party software components) can be discovered based on location(s) (e.g., location within an application/application package, location within a code repository) or naming convention.

At block 501, a 2^{nd} party software component identifier creates an inventory of reusable software components. The 2^{nd} party software component identifier can search for reusable software components in specified paths, application packages (e.g., WAR and NuGet files), and/or repositories.

At block 503, the 2^{nd} party software component identifier begins to iterate over each of the reusable software components in the inventory. For each reusable software component in the inventory, the 2^{nd} party software component identifier iterates through each application source code at block 505. Packages or projects corresponding to applications can be found by path, repository(ies), and/or name.

At block 507, the 2^{nd} party software component identifier searches the source code of the application for an external dependency that refers to the reusable software component. The 2^{nd} party software component identifier selects files of an application depending upon the application code (e.g., build file, pom file, etc.). The 2^{nd} party software component identifier can limit the search to specific sections of a file (e.g., header sections or declaration sections) and use keywords (e.g., import or include) to search for an external dependency that refers to the reusable software component.

At block 509, the 2^{nd} party software component identifier indicates the application and updates an application count for the reusable software component based on occurrence of the external dependency in the source code. Based on the searching, the 2^{nd} party software component identifier determines occurrence of the external dependency within source code of the application. The 2^{nd} party software component identifier can search for a single occurrence and update the application count. If the 2^{nd} party software component identifier is also tracking occurrence frequency per application, the 2^{nd} party software component identifier continues searching to obtain an accurate occurrence frequency.

At block 511, the 2^{nd} party software component identifier determines whether there is an additional application with source code to search . If there is an additional application, operational flow returns to block 505. If not, then operational flow proceeds to block 513.

At block 513, the 2^{nd} party software component identifier determines whether there is an additional reusable software component in the inventory to process. If there is an additional component to process, operational flow returns to block 503. If not, then operational flow proceeds to block 515.

At block 515, the 2^{nd} party software component identifier reports occurrence of 2^{nd} party software components across applications of the organization. The reporting is similar to that already described with reference to Figures 2 and 4.

### Variations

The description provides a few examples for using and/or consuming the information yielded from identifying 2^{nd} party software components in an application. Identifying 2^{nd} party software components can facilitate other actions related to code management and/or increasing intelligence in application development. For instance, a compliance mechanism can be implemented using the 2^{nd} party software component discovery system. When analyzing the program code of applications that use a 2^{nd} party software component, the tool (or another tool) can use the obtained version information to enforce a policy for an individual application, an individual 2^{nd} party software components, and/or different permutations of either or both. The policy can specify a most recent version or version range for any consuming application. As another example use case, mitigation information and/or additional comments related to testing for a 2^{nd} party software component can be propagated to the consuming applications. Furthermore, additional operations can be performed to reduce "noise" in the reporting. For instance, a tool can search source code of an application to determine whether an identified 2^{nd} party software component is used (i.e., invoked or called). If not used, then the 2^{nd} party software component can be removed from the report or not reported.

The flowcharts are provided to aid in understanding the illustrations and are not to be used to limit scope of the claims. The flowcharts depict example operations that can vary within the scope of the claims. Additional operations may be performed; fewer operations may be performed; the operations may be performed in parallel; and the operations may be performed in a different order. It will be understood that each block of the flowchart illustrations and/or block diagrams, and combinations of blocks in the flowchart illustrations and/or block diagrams, can be implemented by program code. The program code may be provided to a processor of a general purpose computer, special purpose computer, or other programmable machine or apparatus.

As will be appreciated, aspects of the disclosure may be embodied as a system, method or program code/instructions stored in one or more machine-readable media. Accordingly, aspects may take the form of hardware, software (including firmware, resident software, micro-code, etc.), or a combination of software and hardware aspects that may all generally be referred to herein as a "circuit," "module" or "system." The functionality presented as individual modules/units in the example illustrations can be organized differently in accordance with any one of platform (operating system and/or hardware), application ecosystem, interfaces, programmer preferences, programming language, administrator preferences, etc.

Any combination of one or more machine readable medium(s) may be utilized. The machine readable medium may be a machine readable signal medium or a machine readable storage medium. A machine readable storage medium may be, for example, but not limited to, a system, apparatus, or device, that employs any one of or combination of electronic, magnetic, optical, electromagnetic, infrared, or semiconductor technology to store program code. More specific examples (a non-exhaustive list) of the machine readable storage medium would include the following: a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a machine readable storage medium may be any tangible medium that can contain, or store a program for use by or in connection with an instruction execution system, apparatus, or device. A machine readable storage medium is not a machine readable signal medium.

A machine readable signal medium may include a propagated data signal with machine readable program code embodied therein, for example, in baseband or as part of a carrier wave. Such a propagated signal may take any of a variety of forms, including, but not limited to, electro-magnetic, optical, or any suitable combination thereof. A machine readable signal medium may be any machine readable medium that is not a machine readable storage medium and that can communicate, propagate, or transport a program for use by or in connection with an instruction execution system, apparatus, or device.

Program code embodied on a machine readable medium may be transmitted using any appropriate medium, including but not limited to wireless, wireline, optical fiber cable, RF, etc., or any suitable combination of the foregoing.

The program code/instructions may also be stored in a machine readable medium that can direct a machine to function in a particular manner, such that the instructions stored in the machine readable medium produce an article of manufacture including instructions which implement the function/act specified in the flowchart and/or block diagram block or blocks.

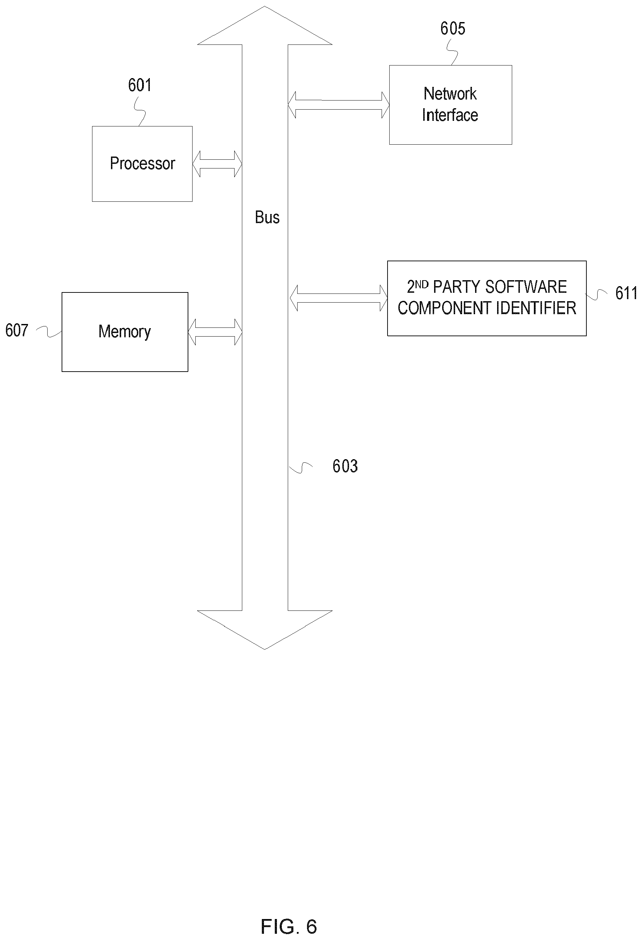

Figure 6 depicts an example computer system with a 2^{nd} party software component identifier. The computer system includes a processor 601 (possibly including multiple processors, multiple cores, multiple nodes, and/or implementing multi-threading, etc.). The computer system includes memory 607. The memory 607 may be system memory or any one or more of the above already described possible realizations of machine-readable media. The computer system also includes a bus 603 and a network interface 605. The system also includes a 2^{nd} party software component identifier 611. The 2^{nd} party software component identifier 611 identifies each external dependency that occurs in source code of multiple applications and is not a 3^{rd} party external dependency. The 2^{nd} party software component identifier 611 is programmed with an inference that an external dependency occurring in source code of multiple applications that does not refer to a 3^{rd} party software component refers to a 2^{nd} party software component. The 2^{nd} party software component identifier 611 reports the occurrence of identified 2^{nd} party external dependencies as previously described. Any one of the previously described functionalities may be partially (or entirely) implemented in hardware and/or on the processor 601. For example, the functionality may be implemented with an application specific integrated circuit, in logic implemented in the processor 601, in a co-processor on a peripheral device or card, etc. Further, realizations may include fewer or additional components not illustrated in Figure 6 (e.g., video cards, audio cards, additional network interfaces, peripheral devices, etc.). The processor unit 601 and the network interface 605 are coupled to the bus 603. Although illustrated as being coupled to the bus 603, the memory 607 may be coupled to the processor 601.

### Terminology

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed.

## Claims

1. A method comprising:
identifying a first set of external dependencies of a first application indicated in application testing results of the first application;
analyzing application testing results of a plurality of applications to determine occurrence of each of the first set of external dependencies among the plurality of applications; and
reporting extent of occurrence across the first application and the plurality of applications for each external dependency determined as occurring in the first application and at least one of the plurality of applications.

2. The method of claim 1, wherein reporting extent of occurrence comprises generating a report indicating, for each of the first set of external dependencies occurring in the first application and at least one of the plurality of applications, the external dependency, each of the applications in which the external dependency occurs, and a flaw of the external dependency, in particular wherein reporting extent of occurrence further comprises generating the report to also indicate at least one of flaw severity, flaw class, frequency of occurrence of an external dependency, and quantity of a flaw.

3. The method of claim 1 or 2 further comprising:
for each of the first set of external dependencies occurring in the first application and at least one of the plurality of applications, determining attribution information for a software component referred to by the external dependency,
wherein reporting the extent of occurrence comprises reporting based, at least in part, on the attribution information.

4. The method of any of the preceding claims, wherein the first set of external dependencies do not refer to third party software components.

5. The method of any of the preceding claims, wherein identifying the first set of external dependencies comprises:
- identifying the first set of external dependencies based on, at least one of, namespaces, dependency tree analysis, and dependency declarations,
- identifying a plurality of external dependencies and filtering out any external dependency that refers to a third party software component, and/or
- analyzing one or more program code repositories, wherein a program code repository comprises one of a binary code repository, source code repository, and a container repository.

6. The method of any of the preceding claims, wherein the application testing results comprise at least one of static application security testing results, dynamic application security testing results, quality assurance testing results, and manual testing results.

7. The method of any of the preceding claims, wherein analyzing application testing results of a plurality of applications to determine occurrence of each of the first set of external dependencies among the plurality of applications comprises scanning source code of the plurality of applications in one or more code repositories of an organization for external dependencies that match one or more of the first set of external dependencies and maintaining a data structure to track occurrence by application.

8. A non-transitory, machine-readable medium having program code stored thereon, the program code comprising instructions to:
search source code repositories to identify external dependencies indicated in source codes of a plurality of applications which do not correspond to third-party software components;
determine which of the identified external dependencies occur in multiple of the plurality of applications; and
for each of the external dependencies that occur in multiple of the plurality of applications,
determine version of a software component identified by the external dependency;and
report occurrence of the external dependencies among the plurality of applications and version of the software components.

9. The machine-readable medium of claim 8, wherein the instructions to search the source code repositories comprise:
- instructions to disregard external dependencies that identify third party software components, and/or
- instructions to search the source code repositories based on at least one of namespaces of an organization that developed the plurality of applications and software components identified by the external dependencies, filenames, and statements corresponding to declaration of an external dependency.

10. The machine-readable medium of claim 8 or 9, wherein a software component comprises one of a software library, a program file, a module, a sub-module, and a software package.

11. The machine-readable medium of any of claims 8 to 10, wherein the program code further comprises instructions to maintain a tracking data structure that indicates applications and corresponding external dependencies identified from searching the source code repositories, wherein the instructions to determine which of the identified external dependencies occur in multiple of the plurality of applications comprise instructions to access the data structure to determine which of the identified external dependencies occur in multiple of the plurality of applications.

12. The machine-readable medium of any of claims 8 to 11, wherein the instructions to determine, for each of the external dependencies that occur in multiple of the plurality of applications, version of a software component identified by the external dependency comprise instructions to determine version information of the software component, in particular wherein the instructions to report occurrence of the external dependencies among the plurality of applications and version of the software components comprise instructions to report, for each of the external dependencies, the external dependency, and each of the applications in which the external dependency occurs.

13. An apparatus comprising:
a processor; and
a machine-readable medium having instructions stored thereon that are executable by the processor to cause the apparatus to,
determine occurrence of a set of second party software components among a plurality of applications of an organization, wherein the instructions to determine occurrence of the set of second party software components comprise instructions executable by the processor to cause the apparatus to,
identify the set of second party software components of an organization; and
search source code of the plurality of applications for external dependencies that refer to the set of second party software components; and
report extent of occurrence of the set of second party software components among the plurality of applications of the organization.

14. The apparatus of claim 13, wherein a second party software component is a software component developed by an entity internal to the organization and external with respect to the plurality of applications, and/or
wherein the instructions to report extent of occurrence of the set of second party software components among the plurality of applications of the organization comprise instructions executable by the processor to cause the apparatus to report the set of second party software components, and the applications in which the set of second party software components occur.

15. The apparatus of claim 13 or 14, wherein the instructions to identify the set of second party software components comprise:
- instructions executable by the processor to cause the apparatus to analyze testing results of a first application of the organization for external dependencies indicated in the testing results,
- instructions executable by the processor to cause the apparatus to search one or more code repositories of the organization for software components that are not third party software components and not first party software components with respect to the plurality of applications.
